# EUROPEAN PATENT SPECIFICATION

(11) **EP 2 031 020 B1**
(45) Date of publication and mention of the grant of the patent: **04.01.2012**
(21) Application number: 06832836.8
(22) Date of filing: 17.11.2006
(51) Int. Cl.: C08L 69/00, C08K 5/42, C08L 67/04, C08L 83/04, G02B 5/02

(54) **FLAME-RETARDANT AND LIGHT-DIFFUSING POLYCARBONATE RESIN COMPOSITION AND LIGHT-DIFFUSING PLATE MADE OF THE SAME**
FLAMMWIDRIGE UND LICHTSTREUENDE POLYCARBONATHARZZUSAMMENSETZUNGEN UND LICHTSTREUENDE PLATTE DARAUS
FORMULE DE RÉSINE POLYCARBONATE IGNIFUGEANTE ET DIFFUSANT LA LUMIÈRE ET PLAQUE DIFFUSANT LA LUMIÈRE FABRIQUÉE À PARTIR DE LADITE FORMULE

(30) Priority: 07.06.2006 JP 2006158021; 14.06.2006 JP 2006164328; 09.08.2006 JP 2006216395
(43) Date of publication of application: 04.03.2009
(73) Proprietor: Styron Europe GmbH, 8810 Horgen (CH)
(72) Inventor: KAWAGOSHI, Akihito, Osaka-shi Osaka 554-8558 (JP); NUKUI, Shinji, Osaka-shi Osaka 554-8558 (JP)
(74) Representative: Klusmann, Peter
(86) International application number: PCT/JP2006/322957
(87) International publication number: WO 2007/141893

(56) References cited:
- JP-A- 11 217 494
- JP-A- 2000 169 695
- JP-A- 2005 015 659
- JP-A- 2005 263 911
- JP-A- 2006 063 121
- JP-A- 2006 063 122
- JP-A- 2006 083 309
- JP-A- 2006 089 599
- JP-A- 2006 124 517
- DATABASE WPI Week 200622 Thomson Scientific, London, GB; AN 2006-207565 XP002538706 & JP 2006 063122 A (MITSUBISHI ENG PLASTICS KK) 9 March 2006 (2006-03-09)
- DATABASE WPI Week 200622 Thomson Scientific, London, GB; AN 2006-207564 XP002538753 & JP 2006 063121 A (MITSUBISHI ENG PLASTICS KK) 9 March 2006 (2006-03-09)
- DATABASE WPI Week 200516 Thomson Scientific, London, GB; AN 2005-145401 XP002538754 & JP 2005 015659 A (MITSUBISHI ENG PLASTICS KK) 20 January 2005 (2005-01-20)
- DATABASE WPI Week 200627 Thomson Scientific, London, GB; AN 2006-258048 XP002538755 & JP 2006 089599 A (SUMITOMO DOW LTD) 6 April 2006 (2006-04-06)
- DATABASE WPI Week 200577 Thomson Scientific, London, GB; AN 2005-752156 XP002538756 & JP 2005 263911 A (SUMITOMO DOW LTD) 29 September 2005 (2005-09-29)
- DATABASE WPI Week 200627 Thomson Scientific, London, GB; AN 2006-256701 XP002538757 & JP 2006 083309 A (SUMITOMO DOW LTD) 30 March 2006 (2006-03-30)

## Description

### Field of the Invention

The present invention relates to a light diffusing polycarbonate resin composition to which flame retardance is imparted by adding a silicone compound of a specific construction and, when desired, an organic metal salt compound to a light diffusing polycarbonate resin containing a light diffusing agent and, when desired, polycaprolactone without adversely affecting the light diffusing and luminance properties and without incorporating chlorine or bromine, and a light diffusing sheet thereof. More specifically, the present invention presents a light diffusing polycarbonate resin composition with excellent flame retardance, ideally used in parts materials covering a light source, for example, in light diffusing sheets for direct backlighting units and edge lighting units for liquid crystal television, globe boxes for lighting devices, switches for various devices and all applications requiring light diffusion properties and a light diffusion sheet molded from the same.

### Prior Art

Polycarbonate resins are transparent, transmit light and are used in a broad range of applications in electrical, electronic, OA, automotive and other areas. When a polycarbonate resin is used in applications such as direct lighting and edge lighting type units for liquid crystal televisions, lighting device covers, switches in various devices and the like, the light source is visible since the resin transmits light. Therefore, a material having sufficient light diffusing properties such that it does not reveal the shape of the light source (a lamp) behind a molded resin product without adversely affecting the luminance of the light source as much as possible is being sought.

In the conventional technology, a method in which polymer or inorganic particles with a different index of refraction were added as a dispersed phase to a continuous phase formed using a polycarbonate resin was used for the purpose of imparting light diffusing properties to the polycarbonate resin. (Patent Reference 1) In addition, methods to realize desired light diffusion properties by adjusting the refractive index difference between the dispersed phase and the continuous phase or the size of the particles in the dispersed phase have been proposed. (Patent References 2 and 3)
[Patent Reference 1]
   Japanese Patent Application Public Disclosure (Kokai) No. S60-184559
[Patent Reference 2]
   Japanese Patent Application Public Disclosure (Kokai) No. H03-143950
[Patent Reference 3]
   Japanese Patent Application Public Disclosure (Kokai) No. H07-234304

Although polycarbonate resin is a highly flame retardant plastic material possessing self extinguishing properties, even better flame retardance is being sought in order to satisfy the need for safety in electrical, electronic and OA applications where light diffusing sheets are used.

A method in which a large amount of an oligomer or a polymer of the carbonate derivative of brominated bisphenol A has previously been used to improve the flame retardance of polycarbonate resins. However, the addition of a large amount of halogenated compound containing bromine raised a concern about the generation of a gas containing the halogen upon combustion. In addition, the use of a flame retarding agent that does not contain chlorine, bromine and the like is desired from an environmental perspective.

### Problems to be solved by the Invention

The objective of the present invention is to present a light diffusing polycarbonate resin composition with excellent flame retardance without adversely affecting the luminance and light diffusing properties and without containing chlorine or bromine and to present a light diffusing sheet.

### Means to solve the Problems

The inventors conducted an extensive study to solve the problems described above. As a result, the inventors discovered a polycarbonate resin that is capable of yielding a light diffusing sheet with excellent flame retardance and light diffusing properties and a high degree of optical performance without adversely affecting the luminance and light diffusion properties by adding a light diffusion agent, a silicone compound with a specific structure a polycaprolactone and a metal salt of an organic compound to a polycarbonate resin. The present invention was completed based on the discovery.

That is, the present invention relates to a flame retardant and light diffusing polycarbonate resin composition comprising 100 parts by weight of a polycarbonate resin (A), 0.1 to 8 parts by weight of a light diffusing agent (B), 0.01 to 1.5 parts by weight of a silicone compound (C), wherein the main chain of the silicone compound (C) is branched and the silicone compound (C) contains organic functional groups and the presence of aromatic groups is essential as the organic functional groups but the presence of hydrocarbon groups other than aromatic groups is optional as the organic functional groups other than terminal groups,

a polycaprolactone (D) in an amount of 0.1 to 1.2 parts by weight per 100 parts by weight of the polycarbonate resin (A), and

a metal organic compound (E) in an amount of 0.001 to 0.8 part by weight per 100 parts by weight of the polycarbonate resin (A) and a light diffusing sheet molded thereof.

### Advantages of the Invention

The light diffusion sheet obtained by molding the light diffusing polycarbonate resin composition of the present invention, having excellent flame retardance has excellent flame retardance without adversely affecting the luminance and light diffusion properties of the light diffusing polycarbonate resin and is ideal for use in all applications requiring a high degree of optical performance.

### Brief Description of the Drawing

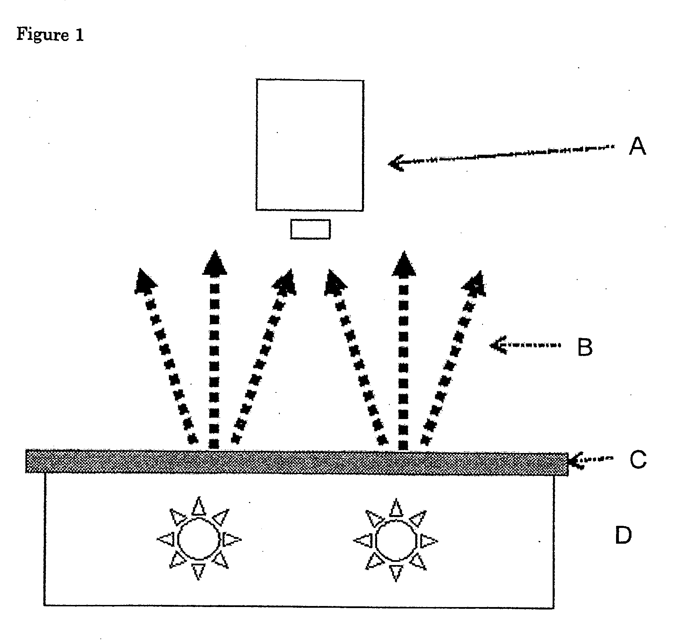

Figure 1 shows the method used in the present invention for measuring the luminance between lamps. Explanation of the Symbols: A: Luminance meter; B: Light beams from a lamp; C: Light diffusion sheet; D: Lamps (cold anode tubes)

### Detailed Description of the Invention

The polycarbonate resin (A) used in the present invention is a polymer obtained using a phosgene method wherein a variety of dihydroxy diaryl compounds is allowed to react with phosgene or using an ester exchange method wherein a dihydroxy diaryl compound and a carboxylic acid ester such as diphenyl carbonate and the like are allowed to react. Polycarbonate resins produced using 2,2-bis(4-hydroxyphenyl) propane (bisphenol A) may be cited as a typical example.

As the dihydroxy diaryl compound described above, bis(hydroxyaryl) alkanes such as bis(4-hydroxyphenyl) methane, 1,1-bis(4-hydroxyphenyl) ethane, 2,2-bis(4-hydroxyphenyl) butane, 2,2-bis(4-hydroxyphenyl) octane, bis(4-hydroxyphenyl) phenyl methane, 2,2-bis(4-hydroxyphenyl-3-methylphenyl) propane, 1,1-bis(4-hydroxy-3-tertiary-butylphenyl) propane, 2,2-bis(4-hydroxy-3-bromophenyl) propane, 2,2-bis(4-hydroxy-3,5-dibromophenyl) propane and 2,2-bis(4-hydroxy-3,5-dichlorophenyl) propane; bis(hydroxyaryl) cycloalkanes such as 1,1-bis(4-hydroxyphenyl) cyclopentane and 1,1-bis(4-hydroxyphenyl) cyclohexane; dihydroxy diaryl ethers such as 4,4'-dihydroxy diphenyl ether and 4,4'-dihydroxy-3,3'-dimethyldiphenyl ether; dihydroxy diaryl sulfides such as 4,4'-dihydroxy diphenyl sulfide; dihydroxy diaryl sulfoxides such as 4,4'-dihydroxy diphenyl sulfoxide and 4,4'-dihydroxy-3,3'-dimethyl diphenyl sulfoxide and dihydroxy diaryl sulfones such as 4,4'-dihydroxy diphenyl sulfone and 4,4'-dihydroxy-3,3'-dimethyl diphenyl sulfone and the like may be cited in addition to bisphenol A. They may be used individually or as a mixture of at least two types. In addition to these examples, piperazine, dipiperidyl hydroquinone, resorcinol, 4,4'-dihydroxydiphenyl and the like may be mixed and used.

Furthermore, the dihydroxy diaryl compounds described above and phenol compounds with at least three valences such as those shown below may be mixed and used. As the phenol with at least three valences, fluoroglucine, 4,6-dimethyl-2,4,6-tri-(4-hydroxyphenyl)-heptane, 2,4,6-dimethyl-2,4,6-tri-(4-hydroxyphenyl)-heptane, 1,3,5-tri-(4-hydroxyphenyl)-benzol, 1,1,1-tri-(4-hydroxyphenyl)-ethane and 2,2-bis-[4,4-(4,4'-dihydroxydiphenyl)-cyclohexyl]-propane and the like may be cited.

The viscosity average molecular weight of the polycarbonate resin is ordinarily 10,000 to 100,000, but 15,000 to 35,000 is preferred and 17,000 to 28,000 is more preferred. When producing such a polycarbonate resin, a molecular weight adjusting agent, a catalyst and the like may be used as needed.

The light diffusing agent (B) used in the present invention is not particularly restricted among polymeric systems and inorganic systems as far as the chemical composition is concerned. However, the agent needs to be present in the form of particles that are insoluble or slightly soluble in the matrix phase when a light diffusing agent (B) is added to the polycarbonate resin (A) component of the present invention and is dispersed using a well known method such as melting and mixing in an extruder.

As specific examples of the light diffusing agent, inorganic diffusion agents such as calcium carbonate, silica, silicones, zinc sulfide, zinc oxide, titanium oxide, titanium phosphate, magnesium titanate, magnesium titanate [sic], mica, glass filler, barium sulfate, clay, talc, rubber-like silicone elastomers, polymethyl silses oxanes and the like and organic diffusion agents such as acrylic, styrenic, polyester type, polyolefin type, urethane type, nylon type, styrene methacrylate type, fluorine type, norbornene type and the like agents may be cited.

Furthermore, the particle diameter of the light diffusing agent is not particularly restricted as long as the addition of the diffusing agent yields the desired light diffusion property. However, an average particle diameter of about 1 to 30 µm can ideally be used. When the particle diameter is less than 1 µm, the agent simply transmits light and a light diffusing effect is sometimes difficult to obtain. Similarly, when the particle diameter exceeds 30 µm, a sufficient light diffusing effect is not obtained and visual recognition is sometimes poor. In addition, the particle size distribution is not particularly restricted, but may be about 0.1 to 100 µm. Furthermore, the range 1.5 to 25 µm is more ideally used. At least two light diffusing agents with different average particle sizes, particle size distributions and types may be used in combination. Agents with a particle size distribution that is not uniform and have at least two particle size distributions may be used individually or in combination.

The amount of an added light diffusing agent (B) is 0.1 to 8 parts by weight per 100 parts by weight of the polycarbonate resin (A) of the present invention. When the amount added is less than 0.1 parts by weight, a sufficient light diffusing effect becomes difficult to obtain making this option unfavorable. Similarly, the light transmittance is adversely affected when the amount exceeds 8 parts by weight, and sufficient light diffusing performance cannot be obtained, making this option unfavorable. The range 0.2 to 6 parts by weight is more preferred.

The silicone compound (C) used in the present invention, as shown in the general formula (1), contains a branched main chain and also aromatic groups as organic functional groups or aromatic groups and hydrocarbon groups (excluding aromatic groups).

### General formula (1)

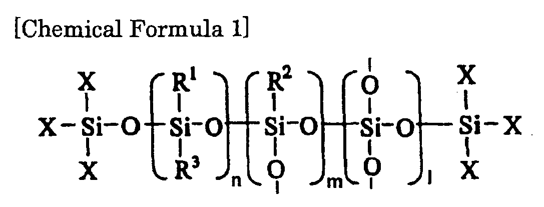

Here R¹, R² and R³ represent organic functional groups bonded to the main chain, and X represents terminal groups.

That is, the presence of T units [RSiO_{1.5} (in the formula, R represents an organic functional group)] and/or Q units (SiO_{2.0}) as branching units is a characteristic. The presence of at least 20 mole % of siloxane units in the whole is preferred. When less than 20 mole % is present, the heat resistance of the silicone compound (C) and its flame retarding effect decline. In addition, the viscosity of the silicone compound (C) itself is too low, and the kneading properties with the polycarbonate resin (A) and the molding properties are sometimes adversely affected. The presence of at least 30 mole % and no more than 95 mole % is more preferred.

In addition, the silicone compound (C) preferably contains at least 20 mole % of aromatic groups in the organic functional groups bonded to the main chain and branched side chains as the terminal groups or functional groups other than the terminal groups. When the concentration is below this range, the flame retarding effect sometimes declines due to the difficulty with which aromatic groups condense among themselves during combustion. At least 40 mole % but no more than 95 mole % is more preferred.

Aromatic groups must be present as the organic functional groups. As the aromatic groups, phenyl, biphenyl, naphthalene or their derivatives are preferred, but phenyl groups are more preferred from a safety standpoint.
Hydrocarbon groups other than aromatic groups may be optionally present as the organic functional groups other than terminal groups. As the hydrocarbon groups other than aromatic groups, alkyl groups, particularly methyl groups, are preferred.
The terminal groups are preferably one or a mixture of two to four selected from methyl group, phenyl group, hydroxyl group and alkoxy group. The silicone compound (C) can be uniformly dispersed in a polycarbonate resin (A) when these terminal groups are selected since gel formation (crosslinking) of the silicone compound (C) occurs with difficulty when a polycarbonate resin (A) and a silicone compound (C) are kneaded due to low reactivity. As a result, an even better flame retarding effect can be imparted and molding properties further improve. The methyl group is particularly preferred. When the methyl group with extremely low reactivity is selected, the dispersion is extremely good and the flame retardance is further improved.

The average molecular weight (weight average) of the silicone compound (C) is preferably at least 5,000 but no more than 500,000. When the average molecular weight is less than 5,000, the heat resistance of the silicone compound itself declines lowering the flame retarding effect. Furthermore, the melt viscosity is too low and causes the silicone compound to sometimes leach out on the surface of the molded polycarbonate resin (A) material, adversely affecting the molding properties. In addition, when the average molecular weight exceeds 500,000, the melt viscosity rises and sometimes adversely affects the dispersion uniformity in the polycarbonate resin (A) causing the flame retarding effect and molding properties to decline. Furthermore, at least 10,000 but no more than 270,000 is particularly preferred.

The amount of silicone compound (C) added is 0.01-1.5 parts by weight per 100 parts by weight of the polycarbonate resin (A) of the present invention. An added amount exceeding the range in either direction is unfavorable since the flame retarding effect is inadequate. The range 0.01-0.8 part by weight is more preferred, and the range 0.05-0.5 part by weight is further preferred.

The polycaprolactone (D) used in the present invention is a polymer manufactured using a ring opening polymerization of ε-caprolactone in the presence of a catalyst, and a homopolymer of 2-oxepanone is ideal for use. Said polymer is readily available commercially, and Tone polymer manufactured by Dow Chemical, CAPA manufactured by Solvay and the like may be used. A viscosity average molecular weight of the polycaprolactone of 10,000 to 100,000 is ideal, but 40,000 to 90,000 is even more preferred.

Furthermore, the polycaprolactone also includes modified polycaprolactones obtained by having 1,4-butane diol and the like co-present when ε-caprolactone is subjected to a ring opening polymerization, modified polycaprolactones obtained by substituting molecular termini with ether or ester groups and the like.

The amount of polycaprolactone (D) added is 0.1 to 1.2 parts by weight per 100 parts by weight of the polycarbonate resin (A) of the present invention. When the amount added is less than 0.1 part by weight, the luminance improving effect is not observed. Similarly, when the amount added exceeds 1.2 parts by weight, sufficient flame retardance is not obtained, making this option unfavorable. A more preferred range is 0.2 to 0.9 part by weight.

A metal salt of an aromatic sulfonic acid and a metal salt of a perfluoroalkane sulfonic acid may be cited as the metal salt of an organic compound (E) used in the present invention. Ideally, the potassium salt of 4-methyl-N-(4-methylphenyl) sulfonyl-benzene sulfonamide, potassium diphenylsulfone-3-sulfonate, potassium diphenylsulfone-3-3'-disulfonate, sodium para-toluene sulfonate, perfluorobutane sulfonic acid potassium salt and the like may be used.

The amount of the metallic salt of an organic compound (E) added is 0.001 to 0.8 part by weight per 100 parts by weight of the polycarbonate resin (A). When the amount added is less than 0.001 part by weight, a flame retardance improving effect is not observed, making this option unfavorable. In addition, when the amount added exceeds 2 parts by weight, haze increases and sufficient luminance is not realized, making this option unfavorable. A more ideal amount added is in the range of 0.005 to 0.4 part by weight.

Various well known additives, polymers and the like may be added as needed when performance other than light diffusing properties are demanded in practice from the light diffusing polycarbonate resin composition of the present invention with excellent flame retardance.

For example, phenol type or phosphorus type thermal stabilizing agents [2,6-di-t-butyl-4-methylphenol, 2-(1-methylcyclohexyl)-4,6-dimethylphenol, 4,4'-thiobis-(6-t-butyl-3-methylphenol), 2,2-methylene bis-(4-ethyl-6-t-methylphenol), n-octadecyl-3-(3,5-di-t-butyl-4-hydroxyphenyl) propionate, tris-(2,4-di-t-butylphenyl) phosphite, tetrakis-(2,4-dit-butylphenyl) 4,4'-biphenylene diphosphinate and the like], lubricants [paraffin wax, n-butyl stearate, synthetic beeswax, natural beeswax, glycerin monoesters, montanic acid wax, polyethylene wax, pentaerythritol tetrastearate and the like], coloring agents [for example, titanium oxide, carbon black or a dye], fillers [calcium carbonate, clay, silica, glass fibers, glass spheres, glass flakes, carbon fibers, talc, mica, various whiskers and the like], fluidity improving agents, developing agents [epoxidized soy bean oil, fluid paraffin and the like] and, furthermore, other thermoplastic resins and various impact resistance improving agents (rubber reinforced resins obtained using graft polymerization of a compound such as methacrylate esters, styrene, acrylonitrile and the like on a rubber such as polybutadiene, polyacrylate esters, ethylene·propylene type rubber and the like may be listed as examples) may be added as needed.

The execution mode and order are not restricted at all in the present invention. For example, optional amounts of a polycarbonate resin (A), a light diffusing agent (B), a silicone compound (C) with a specific structure and, when desired, polycaprolactone (D) may be metered and added at once to a tumbler, a ribbon blender, a high speed mixer and the like and the mixture may be subsequently melted and kneaded using an ordinary monoaxial or diaxial extruder to form pellets in one method. Alternately in another method, individual components may be separately metered in portions or as a whole, added to an extruder using multiple numbers of supply devices and may be melted and mixed. Conditions such as the locations at which components are added to the extruder, the extruder temperature, screw rotation rates, supply rates and the like may be optionally selected according to the circumstances when melting and mixing these components, and the mixture may be formed into pellets. In addition, the method used to mold the light diffusing resin composition with excellent flame retardance of the present invention is not particularly restricted, and a well known injection molding method, injection compression molding method, extrusion molding method and the like may be used.

### Examples

The present invention is further explained using examples below, but the present invention is not limited to these examples. Now the terms "%" and "parts" in the examples refer to weight standards unless specifically stated otherwise.

Now the starting materials used are as follows.

### Polycarbonate resin

Sumitomo Dow K.K., Calibre 200-3 (viscosity average molecular weight: 28,000, henceforth abbreviated to "PC").

### Light diffusing agent

Rohm and Haas Corp., EXL-5136 (acrylic diffusion agent, henceforth abbreviated to "LD-1")
Nikko Rika K.K., MSP-S020 (methyl silicone type diffusing agent, henceforth abbreviated to "LD-2").

### Silicone compound

The silicone compound was produced according to a commonly practiced production method. That is, suitable amounts of diorganodichlorosilane, mono-organotrichlorosilane and tetrachlorosilane or their partially hydrolyzed condensates were dissolved in an organic solvent. Water was added to allow hydrolysis to occur, partially condensed silicone compound was formed and triorganochlorosilane was further added to complete the polymerization. The solvent was subsequently separated using distillation and the like. The structural properties of a silicone compound synthesized using the method described above are as follows:
- the D/T/Q unit ratio in the main chain structure: 40/60/0 (molar ratio)
- phenyl group ratio (*) in the total organic functional groups: 60 mole %
- terminal groups: methyl groups only
- weight average molecular weight (**): 15,000
* A phenyl group was first present in a T unit in a silicone containing the T units and was present in D units for the remainder of the time. When a phenyl group was attached to a D unit, those with one group attached were preferred. When additional phenyl groups were present, two of them were attached. With the exception of the terminal groups, organic functional groups other than phenyl groups were all methyl groups.
** The significant figures for the weight average molecular weight were two digits.

### (Henceforth abbreviated to "Si flame retarding agent".)

### Polycaprolactone

Solvay K.K., CAPA6800 (viscosity average molecular weight: 80,000, henceforth abbreviated to "PCL").

### Metal salt of organic compound

Sodium para-toluene sulfonate (henceforth abbreviated to "metal salt").

Various properties of the compositions of the present invention and the methods used to measure those properties are explained below.

### 1. Luminance measurements

Two cold anode tubes were placed behind flat test sheets (90x50x2 mm thick) prepared using an injection molding device, and the luminance of the test sheet surface in the direction perpendicular to the lamps was measured. Now the luminance refers to the ratio of the luminosity in one direction to the luminosity per unit area in a surface perpendicular to the direction. In general, it represents the brightness of a light emitting surface [unit: (cd/m²)]. In addition, as the evaluation standard, those having brightness between lamps of at least 4,350 cd/m² passed (O) and those having less than 4,350 cd/m² failed (X). In addition, the measurement method is roughly diagramed in Figure 1.

### 2. Flame retardance

The flame retardance was evaluated using the UL94V vertical combustion test method described below. Test pieces 125x13x3 mm thick were left standing in a constant temperature chamber maintained at 23°C and 50% humidity for forty-eight hours, and the flame retardance was evaluated according to the UL94 test (combustibility test for a plastic material for use in equipment parts) specified by the Underwriters Laboratories. The UL94V test involved holding a burner flame for ten seconds in contact with a test piece of a designated size held in a vertical position, and the flame retardance was evaluated based on the duration of time residual flame was observed and on the drip properties. The test piece was rated into the following categories. A test piece was rated unsuitable if it did not fit the categories below.

**[Table 1]**

| | V-0 | V-1 | V-2 |
|---|---|---|---|
| Residual flame time for each sample | 10 sec or less | 30 sec or less | 30 sec or less |
| Total residual flame time for five samples | 50 sec or less | 250 sec or less | 250 sec or less |
| Cotton ignition caused by the drips | None | None | Observed |

The residual flame time shown in Table 1 referred to the duration of time during which a test piece continued to flame and burn after an ignition source was removed. Cotton ignition caused by the drips was decided by whether a cotton piece positioned about 300 mm under the lower edge of a test piece was ignited by the droppings (drips) from the test piece. In the evaluation standard, V-2 or better passed (O) and a piece that did not fit the categories in Table 1 was marked unsuitable (NR).

A polycarbonate resin (PC), a light diffusing agent (LD-1 or LD-2), a silicone compound (Si flame retarding agent), polycaprolactone (PCL) and a metal salt of an organic compound (metal salt) were dry blended using a super floater (manufactured by Kawata K.K.) in the proportions indicated in Tables 2-5. Subsequently, the mixtures were melted and kneaded using a diaxial extruder (KTX-37 manufactured by Kobe Seikosho K.K., axis diameter = 37 mmΦ, L/D=30) at a temperature of 250-290°C. The pellets obtained were processed using an injection molding machine (J100E2P manufactured by Nihon Seikosho K.K.) at a cylinder set temperature of 300°C to prepare flat test pieces 90 mm long, 50 mm wide and 2 mm thick for measuring luminance and test pieces 125 x 13 x 3 mm thick for evaluating flame retardance. The evaluation results are shown in Tables 2-5.

**[Table 2]**

| | Examples | | | | |
|---|---|---|---|---|---|
| | 1 | 2 | 3 | 4 | 5 |
| PC (parts) | 100 | 100 | 100 | 100 | 100 |
| LD-1 (parts) | 2.0 | 2.0 | 2.0 | -- | -- |
| LD-2 (parts) | -- | -- | -- | 0.5 | 5.0 |
| Si flame retarding agent (parts) | 0.3 | 0.05 | 0.5 | 0.3 | 0.3 |
| Luminance between lamps (cd/m²) | 4440 | 4465 | 4415 | 4540 | 4390 |
| Judgment | ○ | x | ○ | ○ | ○ |
| Flame retardance | V-2 | V-2 | V-2 | V-2 | V-2 |
| Judgment | ○ | ○ | ○ | ○ | ○ |

**[Table 3]**

| | Comparative Examples | | | |
|---|---|---|---|---|
| | 1 | 2 | 3 | 4 |
| PC (parts) | 100 | 100 | 100 | 100 |
| LD-1 (parts) | 2.0 | 2.0 | -- | -- |
| LD-2 (parts) | -- | -- | 0.05 | 15 |
| Si flame retarding agent (parts) | 0.005 | 3.0 | 0.3 | 0.3 |
| Luminance between lamps (cd/m²) | 4475 | 4330 | 4270 | 4200 |
| Judgment | ○ | x | x | x |
| Flame retardance | NR | V-2 | V-2 | V-2 |
| Judgment | | ○ | ○ | ○ |

**[Table 4]**

| | Examples | | Comp. Ex. |
|---|---|---|---|
| | 6 | 7 | 5 |
| PC (parts) | 100 | 100 | 100 |
| PCL (parts) | 0.3 | 0.5 | 3.0 |
| LD-1 (parts) | 2.0 | 2.0 | 2.0 |
| LD-2 (parts) | -- | -- | -- |
| Si flame retarding agent (parts) | 0.3 | 0.3 | 0.3 |
| Luminance between lamps (cd/m²) | 4480 | 4520 | 4560 |
| Judgment | ○ | ○ | ○ |
| Flame retardance | V-2 | V-2 | NR |
| Judgment | ○ | ○ | |

**[Table 5]**

| | Examples | | Comp. Ex. | |
|---|---|---|---|---|
| | 8 | 9 | 6 | 7 |
| PC (parts) | 100 | 100 | 100 | 100 |
| PCL (parts) | 0.3 | -- | 0.3 | -- |
| LD-1 (parts) | 2.0 | 2.0 | 2.0 | 2.0 |
| LD-2 (parts) | -- | -- | -- | -- |
| Si flame retarding agent (parts) | 0.3 | 0.3 | 0.3 | 0.3 |
| Metal salt (parts) | 0.02 | 0.02 | 1.5 | 1.5 |
| Luminance between lamps (cd/m²) | 4480 | 4440 | 4320 | 4310 |
| Judgment | ○ | ○ | X | X |
| Flame retardance | V-1 | V-1 | V-1 | V-1 |
| Judgment | ○ | ○ | ○ | ○ |

As indicated by the data in Table 2, sufficient performance was observed in all categories when the constitution of the present invention was satisfied (Examples 1-5). In addition, as shown by Examples 6 and 7 in Table 4, an improvement in luminance between lamps was observed when a specified amount of polycaprolactone was also added. Furthermore, as indicated by Examples 8 and 9 in Table 5, a flame retardance improvement effect was observed when a specified amount of a metal salt of an organic compound (E) was added.

Simultaneously, as shown by the data in Tables 3 and 4, some defects were observed in all cases when the constitution of the present invention was not satisfied.
Comparative Example 1 was a case in which the amount of the Si flame retarding agent added was less than the amount specified. The luminance between lamps passed but the flame retardance was poor.
Comparative Example 2 was a case in which the amount of the Si flame retarding agent added was greater than the amount specified. The flame retardance passed, but the luminance between lamps was poor.
Comparative Examples 3 and 4 were cases in which the amount of a light diffusion agent that was added was less than or greater than the amount specified. The flame retardance passed for both cases, but the luminance between lamps was poor.
Comparative Example 5 was a case in which the amount of polycaprolactone added was greater than the amount specified. The luminance between lamps passed but the flame retardance was poor.
Comparative Examples 6 and 7 were cases in which the amount of metal salt added was greater than the amount specified. The flame retardance passed, but the luminance between lamps was poor.

## Claims

1. A flame retardant and light diffusing polycarbonate resin composition comprising 100 parts by weight of a polycarbonate resin (A), 0.1 to 8 parts by weight of a light diffusing agent (B), 0.01 to 1.5 parts by weight of a silicone compound (C), wherein the main chain of the silicone compound (C) is branched and the silicone compound (C) contains organic functional groups and the presence of aromatic groups is essential as the organic functional groups but the presence of hydrocarbon groups other than aromatic groups is optional as the organic functional groups other than terminal groups, a polycaprolactone (D) in an amount of 0.1 to 1.2 parts by weight per 100 parts by weight of the polycarbonate resin (A), and a metal organic compound (E) in an amount of 0.001 to 0.8 part by weight per 100 parts by weight of the polycarbonate resin (A).

2. The flame retardant and light diffusing polycarbonate resin composition of claim 1, wherein the amount of the light diffusing agent (B) is 0.2 to 6 parts by weight per 100 parts by weight of the polycarbonate resin (A).

3. The flame retardant and light diffusing polycarbonate resin composition of claim 1 or 2 wherein the average particle size of the light diffusing agent (B) is 1 µm to 30 µm.

4. The flame retardant and light diffusing polycarbonate resin composition of any one of claims 1 to 3 wherein the silicone compound (C) contains at least 20 mole % of units (T units) with a formula RSiO_{1.5} (in the formula R represents an organic functional group) and/or units (Q units) with a formula SiO_{2.0} per entire siloxane unit (R₃-OSiO_{2-0.5})₅

5. The flame retardant and light diffusing polycarbonate resin composition of any one of claims 1 to 4 wherein the silicone compound (C) contains at least 20 mole % of aromatic groups in the organic functional groups present.

6. The flame retardant and light diffusing polycarbonate resin composition of any one of claims 1 to 5 wherein the aromatic groups are phenyl groups, the hydrocarbon groups other than the aromatic groups are methyl groups and the terminal groups are at least one selected from the group comprising methyl groups, phenyl groups, hydroxyl groups and alkoxy groups.

7. The flame retardant and light diffusing polycarbonate resin composition of any one of claims 1 to 6 wherein the amount of the silicone compound (C) is 0.05 to 0.5 part by weight per 100 parts by weight of the polycarbonate resin (A).

8. The flame retardant and light diffusing polycarbonate resin composition of claim 1 wherein the metal organic compound (E) is sodium para-toluenesulfonate.

9. A light diffusing sheet which is obtained by molding the polycarbonate resin composition of any one of claims 1 to 8.

10. The light diffusing sheet of claim 9 used in liquid crystal displays.

11. The light diffusing sheet of claim 10 used in direct backlighting for liquid crystal displays.

## Patentansprüche

1. Flammhemmende und lichtstreuende Polycarbonatharzzusammensetzung, die 100 Gew.-Teile eines Polycarbonatharzes (A), 0,1 bis 8 Gew.-Teile eines Lichtstreuungsmittels (B), 0,01 bis 1,5 Gew.-Teile einer Silikonverbindung (C), worin die Hauptkette der Silikonverbindung (C) verzweigt ist und die Silikonverbindung (C) organische funktionelle Gruppen enthält und das Vorhandensein von aromatischen Gruppen als organische funktionelle Gruppen essentiell ist, aber das Vorhandensein von Kohlenwasserstoffgruppen außer aromatischen Gruppen als organische funktionelle Gruppen außer Endgruppen optional ist, ein Polycaprolacton (D) in einer Menge von 0,1 bis 1,2 Gew.-Teile pro 100 Gew.-Teile des Polycarbonatharzes (A) und eine metallorganische Verbindung (C) in einer Menge von 0,001 bis 0,8 Gew.-Teile pro 100 Gew.-Teilen des Polycarbonatharzes (A) umfasst.

2. Flammhemmende und lichtstreuende Polycarbonatharzzusammensetzung gemäß Anspruch 1, worin die Menge des Lichtstreuungsmittels (B) 0,2 bis 6 Gew.-Teile pro 100 Gew.-Teile des Polycarbonatharzes (A) ist.

3. Flammhemmende und lichtstreuende Polycarbonatharzzusammensetzung gemäß Anspruch 1 oder 2, worin die mittlere Teilchengröße des Lichtstreuungsmittels (B) 1 µm bis 30 µm ist.

4. Flammhemmende und lichtstreuende Polycarbonatharzzusammensetzung gemäß irgendeinem der Ansprüche 1 bis 3, worin die Silikonverbindung (C) mindestens 20 Mol% an Einheiten (T-Einheiten) der Formel RSiO_{1,5} (in der Formel stellt R eine organische funktionelle Gruppe dar) und/oder Einheiten (Q-Einheiten) der Formel SiO_{2,0} pro gesamter Siloxaneinheit (R₃₋₀SO_{2-0,5})₅ enthält.

5. Flammhemmende und lichtstreuende Polycarbonatharzzusammensetzung gemäß irgendeinem der Ansprüche 1 bis 4, worin die Silikonverbindung (C) mindestens 20 Mol% an aromatischen Gruppen in den vorhandenen organischen funktionellen Gruppen enthält.

6. Flammhemmende und lichtstreuende Polycarbonatharzzusammensetzung gemäß irgendeinem der Ansprüche 1 bis 5, worin die aromatischen Gruppen Phenylgruppen sind, die Kohlenwasserstoffgruppen außer den aromatischen Gruppen Methylgruppen sind und die Endgruppen mindestens eine ausgewählt aus der Gruppe sind, die Methylgruppen, Phenylgruppen, Hydroxylgruppen und Alkoxygruppen umfasst.

7. Flammhemmende und lichtstreuende Polycarbonatharzzusammensetzung gemäß irgendeinem der Ansprüche 1 bis 6, worin die Menge der Silikonverbindung (C) 0,05 bis 0,5 Gew.-Teile pro 100 Gew.-Teilen des Polycarbonatharzes (A) ist.

8. Flammhemmende und lichtstreuende Polycarbonatharzzusammensetzung gemäß Anspruch 1, worin die metallorganische Verbindung (E) Natrium-para-Toluolsulfonat ist.

9. Lichtstreuende Folie, die durch Formen der Polycarbonatharzzusammensetzung gemäß irgendeinem der Ansprüche 1 bis 8 erhalten wird.

10. Lichtstreuende Folie gemäß Anspruch 9, die in Flüssigkristallanzeigen verwendet wird.

11. Lichtstreuende Folie gemäß Anspruch 10, die in der direkten Hintergrundbeleuchtung für Flüssigkristallanzeigen verwendet wird.

## Revendications

1. Composition de résine de polycarbonate ignifugeante et diffusant la lumière comprenant 100 parties en poids d'une résine de polycarbonate (A), 0,1 à 8 parties en poids d'un agent diffusant la lumière (B), 0,01 à 1,5 partie en poids d'un composé de silicone (C), dans laquelle la chaîne principale du composé de silicone (C) est ramifiée et le composé de silicone (C) contient des groupes fonctionnels organiques et la présence de groupes aromatiques est essentielle comme les groupes fonctionnels organiques, mais la présence de groupes hydrocarbonés autres que des groupes aromatiques est facultative comme les groupes fonctionnels organiques autres que les groupes terminaux, une polycaprolactone (D) dans une quantité de 0,1 à 1,2 partie en poids pour 100 parties en poids de la résine de polycarbonate (A), et un composé organique métallique (E) dans une quantité de 0,001 à 0,8 partie en poids pour 100 parties en poids de la résine de polycarbonate (A).

2. Composition de résine de polycarbonate ignifugeante et diffusant la lumière selon la revendication 1, dans laquelle la quantité de l'agent diffusant la lumière (B) est 0,2 à 6 parties en poids pour 100 parties en poids de la résine de polycarbonate (A).

3. Composition de résine de polycarbonate ignifugeante et diffusant la lumière selon la revendication 1 ou 2 dans laquelle la taille moyenne de particules de l'agent diffusant la lumière (B) est 1 µm à 30 µm.

4. Composition de résine de polycarbonate ignifugeante et diffusant la lumière selon l'une quelconque des revendications 1 à 3 dans laquelle le composé de silicone (C) contient au moins 20% en moles d'unités (unités T) avec une formule RSiO_{1,5} (dans la formule, R représente un groupe fonctionnel organique) et/ou d'unités (unités Q) avec une formule SiO_{2,0} par unité siloxane complète (R₃-OSiO_{2-0,5})₅.

5. Composition de résine de polycarbonate ignifugeante et diffusant la lumière selon l'une quelconque des revendications 1 à 4 dans laquelle le composé de silicone (C) contient au moins 20% en moles de groupes aromatiques dans les groupes fonctionnels organiques présents.

6. Composition de résine de polycarbonate ignifugeante et diffusant la lumière selon l'une quelconque des revendications 1 à 5 dans laquelle les groupes aromatiques sont des groupes phényle, les groupes hydrocarbonés autres que les groupes aromatiques sont des groupes méthyle et les groupes terminaux sont au moins un choisi parmi le groupe comprenant des groupes méthyle, des groupes phényle, des groupes hydroxyle et des groupes alcoxy.

7. Composition de résine de polycarbonate ignifugeante et diffusant la lumière selon l'une quelconque des revendications 1 à 6 dans laquelle la quantité du composé de silicone (C) est 0,05 à 0,5 partie en poids pour 100 parties en poids de la résine de polycarbonate (A).

8. Composition de résine de polycarbonate ignifugeante et diffusant la lumière selon la revendication 1, dans laquelle le composé organique métallique (E) est le para-toluènesulfonate de sodium.

9. Feuille diffusant la lumière qui est obtenue par moulage de la composition de résine de polycarbonate selon l'une quelconque des revendications 1 à 8.

10. Feuille diffusant la lumière selon la revendication 9 utilisée dans des afficheurs à cristaux liquides.

11. Feuille diffusant la lumière selon la revendication 10 utilisée dans un rétroéclairage direct pour des afficheurs à cristaux liquides.
